# EUROPÄISCHE PATENTSCHRIFT

(11) **EP 0 406 878 B1**
(45) Veröffentlichungstag und Bekanntmachung des Hinweises auf die Patenterteilung: **12.04.1995**
(21) Anmeldenummer: 90112923.9
(22) Anmeldetag: 06.07.1990
(51) Int. Cl.: G01S 7/34, G01S 13/90

(54) **Nahecho-Dämpfungseinrichtung**
Near-end echo attenuation device
Dispositif d'atténuation d'échos proches

(30) Priorität: 07.07.1989 DE 3922429
(43) Veröffentlichungstag der Anmeldung: 09.01.1991
(73) Patentinhaber: Deutsche Forschungsanstalt für Luft- und Raumfahrt e.V., 51126 Köln (DE)
(72) Erfinder: Moreira, Joao, D-8910 Landsberg (DE)
(74) Vertreter: von Kirschbaum, Albrecht, Dipl.-Ing.

(56) Entgegenhaltungen:
- EP-A- 0 225 787
- US-A- 4 194 200
- US-A- 4 509 050
- IEEE IGARSS'88, Edinburgh, 12. - 16. September 1988, Band 1, Seiten 23-24,IEEE, New York, NY, US; J.A. MOREIRA et al.: "Real-time adaptive radiometric correction for imaging radar systems"
- IEEE PROCEEDINGS OF THE 1988 NATIONAL RADAR CONFERENCE CCRS C/X AIRBORNE SYNTHETIC APERTURE RADAR, Ann Arbor, Michigan, 20. - 21. April 1988, Seiten 15-21, IEEE, New York, NY, US; C.E. LIVINGSTON et al.: "CCRS C/X-airborne synthetic aperture radar: An R and D tool for the ERS-1 time frame"
- PATENT ABSTRACTS OF JAPAN, Band 9, Nr. 190, (P-378), 7. August 1985;& JP-A-60 58 570 (MITSUBISHI DENKI K.K.) 04-04-1985

## Beschreibung

Die Erfindung betrifft ein Verfahren zur Adaption der Regeleinrichtung einer Nahecho-Dämpfungseinrichtung nach dem Oberbegriff des Anspruchs 1.

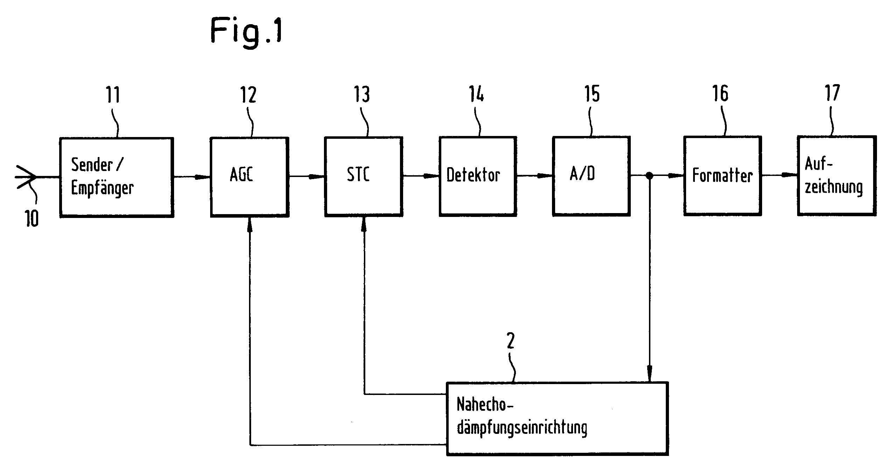

Bei den heute verwendeten Abbildungsradarsystemen werden, wie im Blockschaltbild in Fig.1 dargestellt ist, Radarimpulse (k) über eine Antenne 10 abgegeben, mittels welcher die Rückstreusignale e(k) dann wieder aufgenommen und einer Sende-Empfangseinrichtung 11 zugeleitet werden, in welcher sie heruntergemischt werden. Die empfangenen Rückstreusignale werden in ihrer Amplitude durch zwei in Reihe geschaltete Dämpfungsglieder in Form einer Verstärkungsregelungseinheit (AGC) 12 und einer Nahecho-Dämpfungseinheit 13 (bzw. einer STC-(Sensivity Time Control)Einheit 13) geändert.

Der Nahecho-Dämpfungseinheit (STC) 13 ist zur Demodulation und zur Detektion ein Signaldetektor 14 nachgeschaltet. Das Ausgangssignal des Detektors 14 wird in einem Analog-Digital-(A/D-)Umsetzer 15 digital umgesetzt und über eine Formatter-Einheit 16 einer Aufzeichnungseinrichtung 17 zugeführt.

Da der Leistungsabfall des mittels der Antenne 10 empfangenen Rückstreusignals e(k) mit der Entfernung groß sein kann, beispielsweise bis zu 50dB betragen kann, muß der dynamische Bereich des Abbildungsradarsystems entsprechend angepaßt werden. In der Regel ist jedoch der dynamische Bereich eines solchen Radarsystems durch die in dem Umsetzer 15 erfolgte Analog-Digital-Umsetzung beschränkt. Ohne eine Nahecho-Dämpfung mittels der STC-Einheit 13 würden jedoch bei der Analog-Digital-Umsetzung bzw. bei einer entsprechenden Quantisierung große Verzerrungen erhalten. Hierbei ergeben sich die Verzerrungen bei der Quantisierung aus der Summe des sogenannten Quantisierungsrauschens und des Sättigungsrauschens.

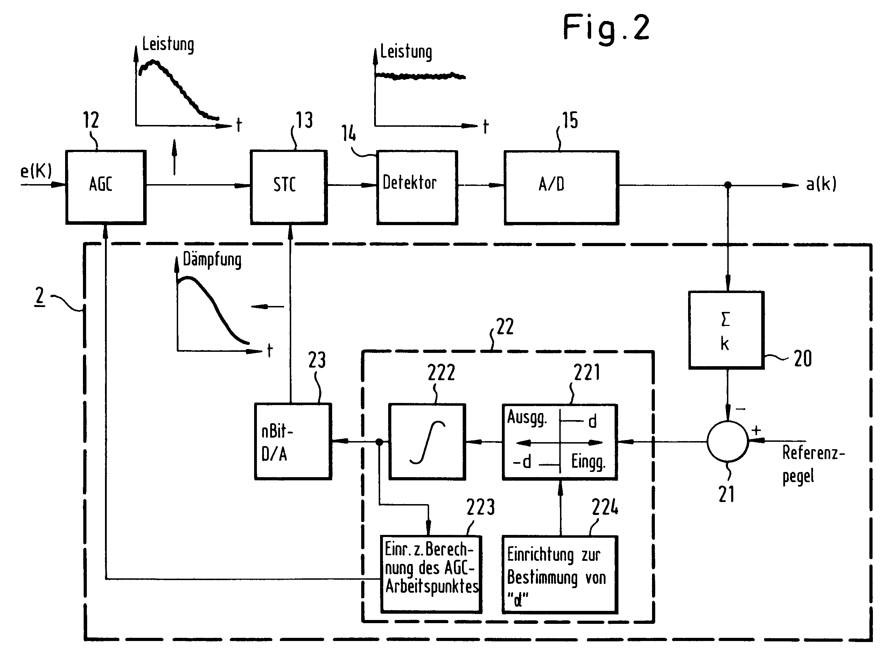

Wie in IEEE IGARSS'88 Edinburgh, 12.-16.September 1988 Band 1, Seiten 23/24, IEEE, New York N.Y., US; J.A.Moreira et al.: "Real-time adaptive radiometric correction for imaging radar systems" beschrieben und in Anlehnung an die dort wiedergegebene Fig.2 in der anliegenden Fig.2 dargestellt ist, werden die digitalisierten Ausgangswerte des A/D-Umsetzers 15 in einer Mittelwert bildenden Einrichtung 20 der erfindungsgemäßen Nahecho-Dämpfungseinrihtung 2 gemittelt. Hierbei wird die Mittelwertbildung des Leistungsverlaufs des digitalisierten Rückstreusignals e(k) über mehrere Radarimpulse - und nicht über die Entfernung - durchgeführt, so daß dadurch die mittlere Rückstreusignal-Leistung über die Entfernung geschätzt werden kann.

Die mittlere Rückstreusignal-Leistung wird dann in einer Vergleichseinrichtung 21 mit einem Referenzpegel verglichen, welcher der gewünschten Soll-Leistung entspricht. Das Ausgangssignal der Vergleichseinrichtung 21 wird anschließend in der Regeleinrichtung 22 geregelt; hierbei erfolgt eine adaptive Regelung in einem Zweipunktregler 221 der Regeleinrichtung 22. Mit dem Zweipunktregler 221 ist eine Einrichtung 224 zur Bestimmung dessen Regelparameters d verbunden In dem vorstehend angeführten IGARSS'88-Artikel ist nur angegeben, daß bei dem Parameter d mit einem großen Wert bei der ersten Iteration begonnen wird und der Wert d durch eine Anzahl von Iterationen kleiner wird, so daß ein Rest-Amplitudenfehler kleiner 1dB ist.

Da dem Zweipunktregler 221 ein Integrierglied 222 nachgeschaltet ist, können hierdurch diskrete Operationen sehr leicht und schnell realisiert werden. Eine hierbei auftretende Eigenschwingung der Regelgröße stört das System nicht, solange nur die Amplitude klein genug bleibt. Die Adaption wird vor allem auch deswegen benutzt, um die Einschwingzeit zu verkürzen, und um die Eigenschwingung so klein wie nur irgend möglich zu halten.

Die angewendete Adaption wird ähnlich wie der Prozeß der sukzessiven Approximation durchgeführt. Hierzu ist der Regeleinrichtung 22 bzw. dem Integrierglied 222 ein n Bit-Digital-Analog-(D/A-)Umsetzer 23 nachgeschaltet, mittels welchem das digitale Signal am Ausgang der Regeleinrichtung 22 zur Steuerung der Nachecho-Dämpfungseinheit (STC) 13 in eine Analogspannung umgesetzt wird, wie durch den links oberhalb des Blockes 23 wiedergegebenen Kurvenverlauf angezeigt ist.

Aufgabe der Erfindung ist es daher, ein Verfahren zur Adaption der Regeleinrichtung einer Nahecho-Dämpfungseinrichtung zu schaffen, in welcher eine optimale Nahecho-Dämpfungskurve erzeugt wird, so daß eine optimale Ansteuerung des oder der Analog-Digital-Umsetzer möglich ist, und bei welchem eine Quantisierung mit minimaler Verzerrung durchgeführt werden kann. Gemäß der Erfindung ist dies Verfahren bei einer Nahecho-Dämpfungseinrichtung nach dem Oberbegriff des Patentanspruchs durch die Merkmale in dessen kennzeichnenden Teil erreicht.

Die der Erfindung zugrundeliegende Aufgabe ist durch eine spezielle Regelung gelöst, bei welcher das Rückstreusignal des Abbildungsradarsystems fortlaufend in Echtzeit ausgewertet wird, so daß auf diese Weise immer eine optimale Nahecho-Dämpfungskurve bestimmt werden kann.

Besonders vorteilhaft bei der erfindungsgemäßen Einrichtung ist, daß die Nahecho-Dämpfungskurve automatisch und gegebenenfalls ständig erzeugt wird und dadurch optimal an das gesamte System angepaßt ist. Um dies zu erreichen sind bei der erfindungsgemäßen Nahecho-Dämpfungseinrichtung keine Informationen über die Geländeeigenschaften, das Antennendiagramm, den Einfallswinkel, die Entfernung sowie über die Verluste und auch die Nichtlinearitäten des verwendeten Abbildungsradarsystems notwendig.

Nachfolgend wird die Erfindung im einzelnen erläutert. Es zeigen:
- Fig.1: ein Blockdiagramm eines herkömmlichen Abbildungsradarsystems mit einer Nah echo-Dämpfungseinrichtung und
- Fig.2: ein Blockdiagramm dieser Nahecho-Dämpfungseinrichtung

Gemäß der Erfindung wird die Berechnung des Parameter "d", mittels welchem der Zweipunktreglers 221 gesteuert wird, folgendermaßen durchgeführt. Das Integrierglied 222 wird mit 2ⁿ/2 initiallisiert, was dem halben Bereich des n Bit-D/A-Umsetzers entspricht. Das heißt, bei dem ersten Iterationsschritt wird der Parameter des Zweipunktreglers 221 gleich 1/4 des n Bit-Bereichs, d.h. 2ⁿ/4 gesetzt. Bei den nächsten Iterationsschritten wird der Wert dieses Parameters immer wieder weiter halbiert, bis 1/2ⁿ des n Bit-Bereichs, d.h. 1 erreicht wird. Falls dann noch mehr Iterationsschritte gewünscht werden bzw. erforderlich sein sollten, bleibt der Parameter des Zweipunktreglers 221 immer eins (1). Die Regelung läßt sich somit grundsätzlich in n (beispielsweise n = 8 für einen 8 Bit D/A-Umsetzer) Iterationsschritten durchführen.

In der Nahecho-Dämpfungseinheit 13 wird eine derartige Regelung dann für alle Entfernungstore durchgeführt, so daß im Ergebnis eine von der Zeit abhängige Nahecho-Dämpfungskurve erzeugt wird. Da in der Praxis das Signal nach der Mittelwertsbildung in der Einrichtung 20 bei der kurzen Integrationszeit in dem Integrierglied 221 immer noch verrauscht ist, wird in der Entfernungsrichtung vor und nach jedem Iterationsschritt in den praktisch ausgeführten Schaltungsanordnungen eine Filterung durchgeführt, was jedoch in dem Blockschaltbild der Fig.2 nicht gesondert dargestellt ist.

Das Ausgangssignal des Integriergliedes 222 wird auch noch an eine Einrichtung 223 zur Berechnung des Arbeitspunktes der Verstärkungsregelungseinheit 12 angelegt. Durch jeweils eine optimale Einstellung des Arbeitspunktes der Verstärkungsregelungseinheit (AGC) 12 wird dadurch eine entsprechende Optimierung des Arbeitspunktes der Nahecho-Dämpfungseinheit 13 durchgeführt.

Der Algorithmus hierfür kann folgendermaßen erklärt werden: Die Nahecho-Dämpfungseinrichtung wird initialisiert; d.h. durch die Initialisierung wird eine vorgesehene Verstärkung der Verstärkungsregelungseinheit (AGC) 12 programmiert. Danach wird eine Nahecho-Dämpfungskurve generiert, wie vorher bereits ausgeführt ist. Nach jeder Generierung wird der Arbeitsbereich des Dämpfungsgliedes in Form der Nahecho-Dämpfungseinheit (STC) 13 überprüft.

Falls der Arbeitsbereich optimal ist, meldet die Nahecho-Dämpfungseinrichtung dem Benutzer, daß die Regelung erfolgreich war. Falls der Arbeitsbereich jedoch nicht optimal ist, wird in der Einrichtung 223 zur Berechnung des Arbeitspunktes der Verstärkungsregelungseinheit 12 eine neue Verstärkung in der AGC-Einheit 12 berechnet und programmiert. Es muß dann eine neue Nahecho-Dämpfungskurve generiert werden, wie vorstehend bereits angeführt ist. Nach der Durchführung des Algorithmus ist der Arbeitsbereich sowohl des A/D-Umsetzers 15 als auch der Nahecho-Dämpfungseinheit (STC) 13 des Abbildungsradarsystems optimiert.

Die Nahecho-Dämpfungseinrichtung kann im übrigen auch bei Sonar-oder Lidar-Systemen implementiert werden.

## Patentansprüche

1. Verfahren zur Adaption der Regeleinrichtung einer Nahecho-Dämpfungseinrichtung für ein Abbildungsradarsystem, das eine Sende-/Empfangseinrichtung zum Aussenden von Radarimpulsen (k) und zum Empfangen der Rückstreuimpulse (e(k)), eine Verstärkungsregelungseinheit, eine Nahecho-Dämpfungseinheit, einen Analog-Digital-Umsetzer, eine Formatter-Einheit sowie eine Aufzeichnungseinrichtung in der angegebenen Reihenfolge aufweist, und bei welchem die Ausgangssignale des Analog-Digital-Umsetzers (15) über eine Mittelwert bildende Einrichtung (20) und eine Vergleichseinrichtung (21) an eine Regeleinrichtung (22) aus einem Zweipunktregler (221), mit welchem eine Einrichtung (224) zur Bestimmung eines Regelparameters (d) verbunden ist, aus einem nachgeschalteten Integrierglied (222) und aus einer Einrichtung (223) zur Berechnung des Arbeitspunktes der Verstärkungsregeleinheit (12) angelegt werden, und der Regeleinrichtung (22) zur Adaption ein n Bit-Digital-Analog-Umsetzer (23) nachgeschaltet ist, mit dessen analoger Ausgangsspannung die Nahecho-Dämpfungseinheit (13) angesteuert wird, dadurch **gekennzeichnet**, daß zur Adaption die Nahecho-Dämpfung so berechnet wird, daß das dem Zweipunktregler (221) nachgeschaltete Integrierglied (222) mit 2ⁿ/2 initialisiert wird, daß der Parameter (d) durch 2ⁿ/4 initialisiert wird und nach jedem Iterationsschritt der Parameter (d) solange halbiert wird, bis der Parameter (d) "1" ist.

## Claims

1. Method for the adaption of the control device of a sensitivity time control device for an imaging radar system, having a transmission/receiving device for transmitting radar pulses (k) and for receiving backscatter pulses (e(k)), an automatic gain control device, a sensitivity time control attenuator, an analog-digital converter, a formatting unit and a recording unit in the above sequence, and by which method the output signals of said analog-digital converter (15) are applied over an average value generating device (20) and a comparator device (21) to a control device (22) comprising an ideal-on-off relay (221) connected to a device (224) for determining a control parameter (d), comprising an integrating member (222) switched downstream and a device (223) for calculating the operating point of the automatic gain control device (12), and whereby for the adaption an n-bit digital analog converter (23) is switched downstream to a control device (22), with the analog output of which the sensitivity time control attenuator (13) is drived, characterized in that for adaption the sensitivity time control is calculated in such a way that the integrating member (222) switched downstream of the ideal on-off relay (221) is initialized with 2ⁿ/2, that the parameter (d) is initialized with 2ⁿ/4 and after each following iteration step the parameter (d) continues to be halved until the parameter (d) becomes "1".

## Revendications

1. Procédé pour l'adaptation de l'appareil régulateur d'un dispositif d'atténuation des échos proches pour un système radar d'imagerie, qui comporte un dispositif émetteur-récepteur pour l'émission d'impulsions radar (k) et pour la réception des impulsions de rétrodiffusion (e(k)), une unité régulatrice d'amplification, une unité d'atténuation des échos proches, un convertisseur analogique-numérique, une unité de formatage ainsi qu'un système d'enregistrement dans la séquence indiquée, et procédé avec lequel les signaux de sortie du convertisseur analogique-numérique (15) sont appliqués par l'intermédiaire d'un dispositif formant une valeur moyenne (20) et un dispositif comparatif (21) à un appareil de régulation (22) constitué par un régulateur à deux points (221) avec lequel est relié un dispositif (224) pour la détermination d'un paramètre de régulation (d), à partir d'un membre d'intégration (222) monté en aval et à partir d'un dispositif (223) pour le calcul du point de travail de l'unité de régulation d'amplification (12), et un convertisseur analogique-numérique de n éléments binaires (23) est monté en aval de l'unité de régulation (22) pour l'adaptation, avec la tension de sortie analogique duquel est commandé le dispositif d'atténuation des échos proches (13), caractérisé en ce que pour l'adaptation, i'atténuation des échos proches est calculée de telle manière que le membre d'intégration (222) monté en aval du régulateur à deux points (221) est initialisé par 2ⁿ/2, en ce que le paramètre (d) est initialisé par 2ⁿ/4 et après chaque étape d'itération le paramètre (d) est divisé de moitié jusqu'à ce que ce paramètre (d) soit égal à" 1".
